# EUROPÄISCHE PATENTSCHRIFT

(11) **EP 1 611 773 B1**
(45) Veröffentlichungstag und Bekanntmachung des Hinweises auf die Patenterteilung: **07.03.2007**
(21) Anmeldenummer: 04725001.4
(22) Anmeldetag: 01.04.2004
(51) Int. Cl.: H05B 3/00, B01J 19/12, B29C 35/08, B41F 23/04, F26B 3/30

(54) **STRAHLERMODUL**
RADIATOR MODULE
MODULE DE RAYONNEMENT

(30) Priorität: 03.04.2003 DE 10315260
(43) Veröffentlichungstag der Anmeldung: 04.01.2006
(73) Patentinhaber: Advanced Photonics Technologies AG, 83052 Bruckmühl-Heufeld (DE)
(72) Erfinder: GESELL, Günther, 83071 Stephanskirchen (DE); BERGE, Torsten, 81827 München (DE); WIRTH, Rolf, 83052 Bruckmühl (DE)
(74) Vertreter: Heinze, Ekkehard
(86) Internationale Anmeldenummer: PCT/EP2004/003476
(87) Internationale Veröffentlichungsnummer: WO 2004/088713

(56) Entgegenhaltungen:
- EP-A- 1 071 310
- DE-C- 853 784
- DE-U- 20 020 149
- US-B1- 6 308 008

## Beschreibung

Die Erfindung betrifft ein Strahlermodul nach dem Oberbegriff des Anspruchs 1.

Es sind Verfahren zur Behandlung von Lackbeschichtungen, Oberflächenstrukturen oder Druckfarben unter Einsatz von elektromagnetischer Strahlung bekannt, deren wesentlicher Wirkanteil im Bereich des nahen Infrarot, insbesondere im Wellenlängenbereich zwischen 0,8 µm und 1,5 µm, liegt. Bei diesen Anwendungen ist typischerweise die Ausbildung einer relativ großflächigen Bestrahlungszone im Interesse einer hohen Produktivität des jeweiligen Verfahrens mit hoher Leistungsdichte von Bedeutung.

Von daher ist auch der Einsatz von mehreren parallel zueinander angeordneten langgestreckten Halogenlampen, die einen röhrenförmigen, an den Enden gesockelten Glaskörper mit mindestens einer Glühwendel haben, in einem langgestreckten Reflektor als Bestrahlungsanordnung für thermische Bestrahlungsprozesse bekannt. Die mit derartigen Bestrahlungsanordnungen realisierten sehr hohen Leistungsdichten oberhalb (teilweise weit oberhalb) von 100 kW/m² erfordern zur Gewährleistung einer ausreichenden Lebensdauer der Lampen und Formbeständigkeit der Reflektoranordnungen eine Kühlung.

In der auf die Anmelderin zurückgehenden DE 100 51 641 A1 wird daher eine modular aufzubauende Bestrahlungsanordnung mit NIR-Strahlern und integrierter Flüssigkeitskühlung des Reflektors vorgeschlagen.

Aus der DE 100 51 642 A1 ist eine Bestrahlungsanordnung zur Ausführung von Prozessen der oben genannten Art bekannt, die einen gekühlten Hauptreflektor, der langgestreckte Halogenlampen trägt, und seitlich von diesem angeordnete separate Seitenreflektoren aufweist. Diese sind insbesondere im wesentlichen senkrecht zu der durch die Mittenachsen der Halogenlampen am Hauptreflektor aufgespannten Ebene angeordnet.

Aus der ebenfalls auf die Anmelderin zurückgehenden DE 100 51 905 A1 ist eine Strahlungsquelle mit langgestreckten Halogenlampen bekannt, deren Enden zum Glaskörper hin umgebogen und verdickt oder verdichtet ausgeführt sind. In einer bevorzugten Ausführung sind den Lampenenden Kühlmittel zur Wärmeabführung zugeordnet, die für einen steilen T-Gradienten zwischen den umgebogenen Bereichen des Glaskörpers und den benachbarten elektrischen Anschlüssen sorgen sollen. In einer noch spezielleren Ausführung ist zur Kühlung ein Pressluft-Strömungskanal mit nahe den Enden des Glaskörpers der Lampen angeordneten Austrittsöffnungen vorgesehen.

In der unveröffentlichten deutschen Patentanmeldung Nr. 102 57 432.4 wird eine luftgekühlte Bestrahlungsanordnung vorgeschlagen, die einen rückseitig mit Kühlrippen ausgestatteten Reflektor und eine speziell gestaltete Kanalanordnung zur Zuleitung von durch ein Gebläse gelieferter Kühlluft zur Reflektorrückseite umfasst.

Die vorgenannten Strahlungsquellen bzw. Bestrahlungsvorrichtungen haben sich inzwischen in mannigfachen Anwendungen bestens bewährt, erreichen hohe Standzeiten und liefern Bestrahlungszonen mit weitgehend den von den Anwendern geforderten Parametern. Jedoch sind auch Anwendungssituationen aufgetreten, in denen die für den Einsatz bestimmter Bestrahlungsanordnungen erforderlichen Voraussetzungen - etwa Kühlwasser- oder Pressluftanschlüsse - nicht gegeben sind. Zudem bestehen in bestimmten Applikationen niedrige Kostenobergrenzen, deren Einhaltung mit bekannten Konstruktionen problematisch ist.

Der Erfindung liegt daher die Aufgabe der Bereitstellung eines verbesserten Strahlermoduls zugrunde, das sich mit vergleichsweise niedrigen Kosten realisieren lässt und dennoch weitgehend ohne Einsatz zusätzlicher Bauteile für vielfältige Anwendungen brauchbar ist.

Diese Aufgabe wird durch ein Strahlermodul mit den Merkmalen des Anspruchs 1 gelöst. Zweckmäßige Fortbildungen des Erfindungsgedankens sind Gegenstand der abhängigen Ansprüche.

Die Erfindung schließt den wesentlichen Gedanken ein, in konstruktiv einfacher und daher kostengünstiger Weise Strahlungsquellen (Emittern) mit nach hinten umgebogenen Enden in den Hauptreflektor integrierte End- bzw. Seitenreflektoren zur Verbesserung der Eigenschaften des Strahlungsfeldes, speziell zu dessen Vergleichmäßigung in den Seitenbereichen, zuzuordnen. Weiterhin schließt die Erfindung den Gedanken ein, diese Endreflektorabschnitte in technologisch vorteilhafter Weise einstückig an den Reflektor- und Kühlkörper anzuformen. Hierdurch werden zusätzliche Montagearbeiten sowie vorgeschaltete separate Herstellungs-, Handhabungs- und Lagerungsvogänge vermieden, die einen wesentlichen Kostenfaktor bei der Erstellung von Bestrahlungsanordnungen der oben skizzierten Art bilden.

In einer bevorzugten Ausführungsform sind die Endreflektorabschnitte über die gesamte Breite des Strahlermoduls im wesentlichen eben, und sie schließen mit der Ebene der Längserstreckung des Strahlermoduls, die parallel zu den Längsachsen der eingesetzten Strahlungsquellen liegt, einen Winkel im Bereich zwischen 30° und 75°, bevorzugt zwischen 45° und 60°, ein. Diese Ausführung sichert in für die meisten Anwendungen befriedigender Weise ein Zurückwerfen von aus dem gekrümmten Strahlerabschnitt seitlich austretender Strahlung in das Arbeits-Strahlungsfeld oberhalb des Hauptreflektorabschnittes, wo sich die langgestreckten Mittelabschnitte der Emitter befinden. Insbesondere gelingt es hierdurch in hinreichender Weise, einen Abfall der Strahlungsdichte in den Seiten- bzw. Endbereichen des Strahlungsfeldes, die über den Krümmungsabschnitten der Strahler liegen, ohne Einsatz zusätzlicher Seitenreflektoren zu vermeiden.

In diesem Sinne ist auch eine weitere Ausführung zweckmäßig, bei der die Endreflektorabschnitte sich jeweils an einer Kante aus dem Reflektor- und Kühlkörper erheben, die auf gleicher Höhe mit dem Übergang vom Krümmungsabschnitt in das Ende der in den Reflektor- und Kühlkörper eingesetzten Strahlungsquellen liegt und von den Krümmungsabschnitten der Strahlungsquellen in Längsrichtung des Reflektor- und Kühlkörpers einen Abstand aufweist, der insbesondere im Bereich zwischen dem halben und ganzen Durchmesser einer Strahlungsquelle liegt. In der praktischen Ausführung des Strahlermoduls ist eine geeignete Abstimmung zwischen der Neigung der Endreflektorabschnitte bezüglich der Ebene der Längserstreckung der Emitter und dem Abstand der "Fußlinie" der Endreflektorabschnitte von den Krümmungsbereichen der Strahler vorzunehmen, die der Fachmann jedenfalls mit wenigen einfachen Versuchen bewerkstelligt.

Des weiteren ist es ausreichend, dass die Endreflektorabschnitte in Höhenrichtung des Reflektor- und Kühlkörpers bis höchstens zu einer durch die Mittenachsen der nebeneinanderliegenden Strahlungsquellen aufgespannten Ebene über dem Reflektor- und Kühlkörper reichen. Hierdurch lassen sich die Länge und Höhe des Reflektor- und Kühlkörpers in sinnvoller Weise begrenzen, ohne unangebrachte Kompromisse hinsichtlich der Strahlungsdichteverteilung in der Bestrahlungszone eingehen zu müssen.

Weiter bevorzugt ist eine luftgekühlte Ausführung des Strahlermoduls, bei der an die den Strahlungsquellen abgewandte Rückseite des Reflektor- und Kühlkörpers Kühlrippen zur Realisierung einer Gebläse-Luftkühlung angeformt sind. Diese Ausführung stellt geringe Ansprüche an eine beim Anwender vorhandene Infrastruktur. Alternativ ist die Erfindung aber auch in einer Ausführung mit flüssigkeitsgekühltem Reflektorkörper realisierbar, bei der in diesen - in an sich bekannter Weise - Fluidströmungskanäle zum Hindurchleiten eines Kühlfluids (Kühlwasser) eingeformt sind.

Die erwähnte luftgekühlte Ausführung kann in herstellungstechnisch wie auch kühlungstechnisch wirkungsvoller Weise derart fortgebildet sein, dass am Reflektor- und Kühlkörper Seitenwandungen angeformt sind, die über die Höhe der Kühlrippen insbesondere hinausragen und durch eine Rückwand verbunden werden. Die Kühlrippen befinden sich dadurch in einem im wesentlich geschlossenen, in Lä ngsrichtung des Strahlermoduls verlaufenden Kühlluftkanal. An diesen kann ein Gebläseaustritt im wesentlichen dicht angeschlossen werden, so dass eine hochwirksame Luftkühlung realisiert wird, die praktisch ohne Auswirkungen auf die umgebenden Anlagenteile, das jeweilige Werkstück und das Bedienpersonal bleibt.

Zur Erzielung einer besonders effizienten Kühlung der Enden der Strahlungsquellen und der ihnen zugeordneten elektrischen Kontakteinrichtungen sind diese bevorzugt mit Kühlrippen ausgerichtet und in Ausschnitte der Kühlrippen derart eingesetzt, dass sie von einem über die Kühlrippen streichenden Kühlluftstrom beaufschlagt werden. Hierdurch wird im Normalfall der Einsatz zusätzlicher Kühlmittel für die Lampenenden (Pressluft o.ä.) überflüssig, was den Einsatz des erfindungsgemäßen Strahlermoduls weiter vereinfacht.

Des weiteren sind bei der erwähnten geschlossenen - in technologisch vorteilhafter Weise bevorzugt einstückigen - Ausführung des Reflektor- und Kühlkörpers zweckmäßigerweise auf der Außenseite der Rückwand des Kühlluftkanals Fixierungs- und Anschlussmittel zur Halterung und zur externen elektrischen Kontaktierung der Strahlungsquellen angeordnet. Hierdurch wird der modulare Aufbau einer Bestrahlungseinrichtung aus einer Mehrzahl der vorgeschlagenen Strahlermodule ebensovereinfacht wie eine Auswechslung einzelner Emitter im Betrieb einer entsprechenden Anlage.

Vorteile und Zweckmäßigkeiten der Erfindung ergeben sich im übrigen aus den abhängigen Ansprüchen sowie der nachfolgenden Beschreibung eines bevorzugten Ausführungsbeispiels anhand der Figuren. Von diesen zeigen:
- Fig. 1: eine perspektivische Darstellung eines Strahlermoduls gemäß einer bevorzugten Ausführungsform der Erfindung, von oben gesehen,
- Fig. 2: eine perspektivische Darstellung eines Strahlermoduls gemäß einer bevorzugten Ausführungsform der Erfindung, von unten gesehen, und
- Fig. 3A bis 3D: eine Draufsicht, eine Querschnittsdarstellung, eine Längssch nittdarstellung sowie eine Seitenansicht dieses Strahlermoduls.

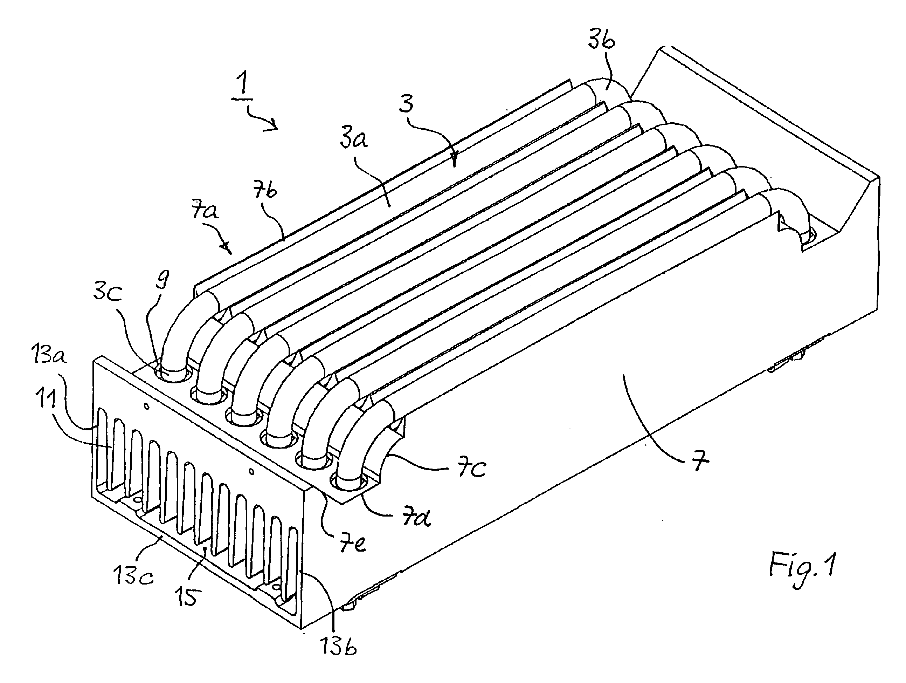

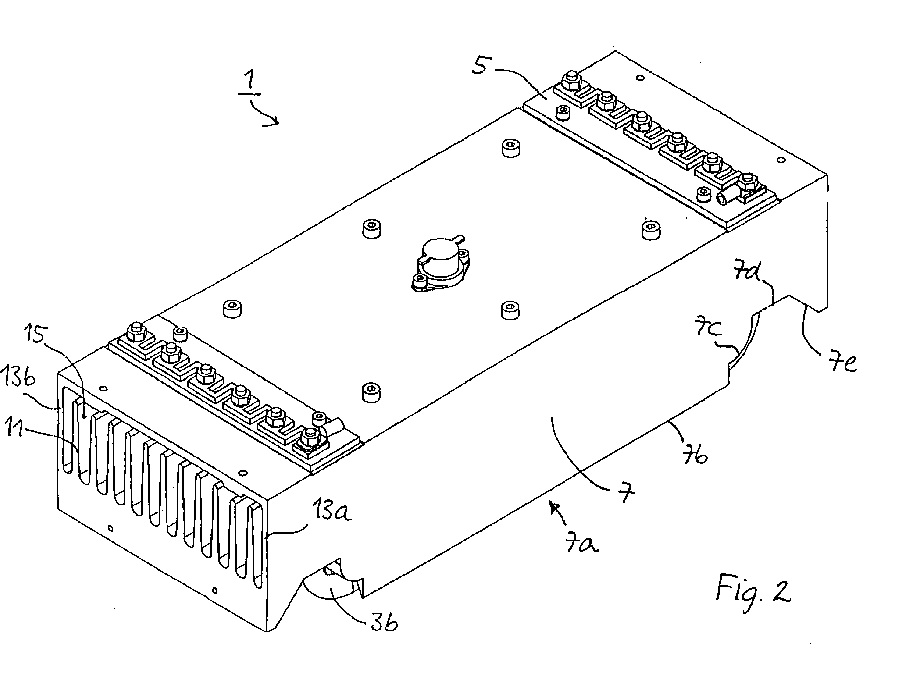

Fig. 1 und 2 zeigen ein NIR-Strahlermodul 1 für thermische Bearbeitungsaufgaben in perspektivischen Darstellungen von oben (der mit Emittern 3 versehenen Reflektor-Oberseite) bzw. von unten (der mit Anschlusskontaktleisten 5 versehenen Rückseite) her.

Kernstück des Strahlermoduls 1 ist ein einstückiger Reflektor- und Kühlkörper 7. Auf dessen Reflektor-Oberseite 7a sind bei der hier dargestellten Ausführung sechs Emitter 3 (als NIR-Strahler mit erhöhter Betriebstemperatur betriebene Halogen-Glühfadenlampen) angeordnet, die jeweils einen Glaskörper mit einem geradlinig langgestreckten Mittelabschnitt 3a, beidseitig an diesen anschließende Krümmungsabschnitte 3b und wiederum an diese anschließende End- bzw. Fassungsabschnitte 3c umfassen.

In Anpassung an diese Form der Emitter 3 ist die Reflektor-Oberseite 7a des Reflektor- und Kühlkörpers 7 im mittleren Bereich mit einer Mehrzahl von in Anpassung an die Anordnung der Emitter parallel zueinander gereihten Hauptreflektorabschnitten 7b versehen, die einen im wesentlichen W-förmigen Querschnitt haben. In Emitterlängsrichtung angrenzend an diese hat die Reflektor-Oberseite 7a des Reflektor- und Kühlkörpers einen im Längsschnitt viertelkreisförmigen Krümmungsabschnitt 7c. An diesen wiederum schließt sich jeweils ein zur Ebene der Längserstreckung der Emitter 3 paralleler, aber dieser gegenüber zurückgesetzter ebener Abschnitt 7d an. Beidseits der ebenen Abschnitte 7d schließlich weist die Reflektor-Oberseite 7a einen unter 45° gegenüber den ebenen Abschnitten 7d und somit auch der Ebene der Längserstreckung der Emitter 3 unter 45° geneigten Endreflektorabschnitt 7e auf. Die Emitter 3 sind durch je eine kreisförmige Durchführungsöffnung 9 im ebenen Abschnitt 7d von der Reflektor-Oberseite 7a des Reflektor- und Kühlerkörpers durch diesen hindurchgeführt.

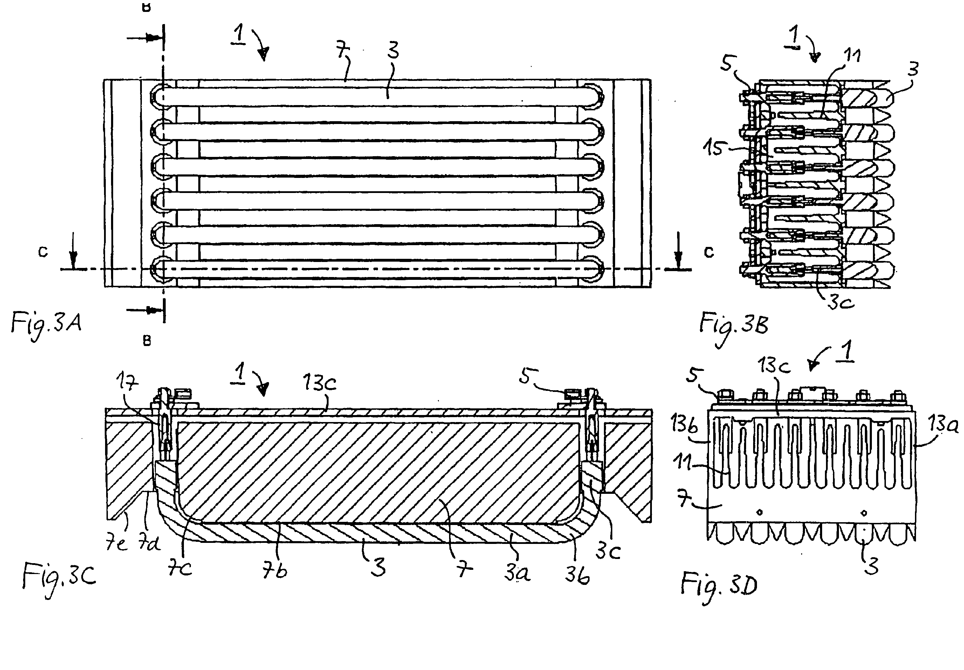

Die Endreflektorabschnitte 7e haben eine (nicht gesondert bezeichnete) Fußlinie, aus der sie aus den ebenen Abschnitten 7d entspringen, welche bei der dargestellten Ausführung um annähernd den halben Lampendurchmesser gegenüber den äußersten Punkten der Emitter 3 bzw. Durchführungsöffnungen 9 versetzt ist. Die Endreflektorabschnitte 7e sind (wie am deutlichsten in Fig. 3c zu erkennen ist) bis nahezu zur Ebene der Hauptreflektorabschnitte 7b nach oben gezogen.

Im Inneren des Reflektorkörpers sind in Längsrichtung verlaufende Kühlrippen 11 vorgesehen, und durch über diese überstehende Seitenwandungen 13a und 13b sowie eine diese verbindende Rückwand 13c wird im Reflektor- und Kühlkörper 3 ein geschlossener Kühlluftkanal 15 gebildet.

Die Figuren 3A bis 3D zeigen Details dieser Anordnung, wobei insbesondere in Fig. 3B und 3D deutlich wird, dass die End- bzw. Fassungsabschnitte 3c der Emitter 3 derart mit Kühlrippen - und zwar jeweils jeder zweiten Kühlrippe 11 - ausgerichtet sind, dass sie in deren Bereich sicher gehaltert und gleichwohl einem durch den Kühlluftkanal 15 streichenden Kühlluftstrom hinreichend ausgesetzt sind, um eine wirksame Lampenendenkühlung zu erreichen. Über geeignete Steckkontakte 17 (deren konstruktive Ausführung nicht Gegenstand der vorliegenden Anmeldung ist) sind die Lampenenden 3c mit den Anschlusskontaktleisten 5 elektrisch und mechanisch verbunden.

Die Ausführung der Erfindung ist nicht auf dieses Beispiel beschränkt, sondern ebenso in einer Vielzahl von Abwandlungen möglich, die im Rahmen fachgemäßen Handelns liegen.

### Bezugszeichenliste

- 1: NIR-Strahlermodul
- 3: Emitter (Halogen-Glühfadenlampe)
- 3a: Mittelabschnitt
- 3b: Krümmungsabschnitte
- 3c: End- bzw. Fassungsabschnitt
- 5: Anschlusskontaktleiste
- 7: Reflektor- und Kühlkörper
- 7a: Reflektor-Oberseite
- 7b: Hauptreflektorabschnitt
- 7c: Krümmungsabschnitt
- 7d: ebener Abschnitt
- 7e: Endreflektorabschnitt
- 9: Durchführungsöffnung
- 11: Kühlrippe
- 13a, 13b: Seitenwandung
- 13c: Rückwand
- 15: Kühlluftkanal
- 17: Steckkontakt

## Patentansprüche

1. Strahlermodul für thermische bzw. UV-Bearbeitungsprozesse, mit einer Mehrzahl von im wesentlichen nebeneinander und parallel zueinander angeordneten Strahlungsquellen für elektromagnetische Strahlung, deren wesentlicher Wirkanteil im UV-Bereich, sichtbaren Bereich und/oder Bereich des nahen IR, insbesondere im Wellenlängenbereich zwischen 250 nm und 1,5 µm, liegt, wobei die Strahlungsquellen jeweils einen langgestreckten Mittelabschnitt, zwei umgebogene Enden und zwei den Mittelabschnitt mit den Enden verbindenden Krümmungsabschnitten aufweisen, und
einem die Strahlungsquellen tragenden Reflektor- und Kühlkörper,
**dadurch gekennzeichnet, dass**
der Reflektor- und Kühlkörper zwei den Krümmungsabschnitten der Strahlungsquellen vom geradlinig langgestreckten Hauptabschnitt zu den Enden zugeordnete, einstückig angeformte Endreflektorabschnitte aufweist.

2. Strahlermodul nach Anspruch 1,
**dadurch gekennzeichnet, dass**
die Endreflektorabschnitte über die gesamte Breite des Strahlermoduls im wesentlichen eben sind und mit der Ebene der Längserstreckung des Strahlermoduls, die parallel zu den Längsachsen der eingesetzten Strahlungsquellen liegt, einen Winkel im Bereich zwischen 30° und 75°, bevorzugt zwischen 45° und 60°, einschließen.

3. Strahlermodul nach Anspruch 1 oder 2,
**dadurch gekennzeichnet, dass**
die Endreflektorabschnitte sich jeweils an einer Kante aus dem Reflektor- und Kühlkörper erheben, die auf gleicher Höhe mit dem Übergang vom Krümmungsabschnitt in das Ende der in den Reflektor- und Kühlkörper eingesetzten Strahlungsquellen liegt und von den Krümmungsabschnitten der Strahlungsquellen in Längsrichtung des Reflektor- und Kühlkörpers einen Abstand aufweist, der insbesondere im Bereich zwischen dem halben und ganzen Durchmesser einer Strahlungsquelle liegt.

4. Strahlermodul nach einem der Ansprüche 1 bis 3,
**dadurch gekennzeichnet, dass**
die Endreflektorabschnitte in Höhenrichtung des Reflektor- und Kühlkörpers bis höchstens zu einer durch die Mittenachsen der nebeneinanderliegenden Strahlungsquellen aufgespannten Ebene über dem Reflektor- und Kühlkörper reichen.

5. Strahlermodul nach einem der vorangehenden Ansprüche,
**dadurch gekennzeichnet, dass**
an die den Strahlungsquellen abgewandte Rückseite des Reflektor- und Kühlkörpers Kühlrippen zur Realisierung einer Gebläse-Luftkühlung ange- - formt sind.

6. Strahlermodul nach Anspruch 5,
**dadurch gekennzeichnet, dass**
der Reflektor- und Kühlkörper mit über die Höhe der Kühlrippen hinausreichenden Seitenwandungen und einer diese verbindenden Rückwand derart ausgeführt ist, dass die Kühlrippen in einem im wesentlichen geschlossenen, in Längsrichtung des Reflektor- und Kühlkörpers verlaufenden Kühlluftkanal aufgenommen sind.

7. Strahlermodul nach Anspruch 5 oder 6,
**dadurch gekennzeichnet, dass**
die Enden der Strahlungsquellen und zugeordnete elektrische Kontakteinrichtungen mit Kühlrippen ausgerichtet und in Ausschnitte der Kühlrippen derart eingesetzt sind, dass sie von einem über die Kühlrippen streichenden Kühlluftstrom beaufschlagt werden.

8. Strahlermodul nach Anspruch 6 oder 7,
**dadurch gekennzeichnet, dass**
auf der Außenseite der Rückwand des Kühlluftkanals Fixierungs- und Anschlussmittel zur Halterung und zur externen elektrischen Kontaktierung der Strahlungsquellen angeordnet sind.

9. Strahlermodul nach einem der vorangehenden Ansprüche,
**dadurch gekennzeichnet, dass**
der Reflektor- und Kühlkörper einstückig angebildet ist.

## Claims

1. A radiator module for thermal and/or UV processing processes comprising a plurality of sources of electromagnetic radiation arranged substantially adjacent and parallel to one another, their essentially effective component being in the UV range, visible range and/or the near IR range, in particular within the range of wavelengths between 250 nm and 1.5 µm, wherein the respective sources of radiation each exhibit an elongated middle section, two bent ends and two curved sections which connect the middle section to the ends, and a reflecting and cooling body supporting the sources of radiation,
**characterized in that**
the reflecting and cooling body comprises two end reflector sections formed integrally with the body and allocated to the curved sections of the sources of radiation from the straight elongate main section to the ends.

2. Radiator module according to claim 1,
**characterized in that**
the end reflector sections are substantially flat over the entire width of the radiator module and form an angle in the range of between 30° and 75°, preferably between 45° and 60°, with the plane of the longitudinal extension of the radiator module which is parallel to the longitudinal axes of the sources of radiation used.

3. Radiator module according to claim 1 or 2,
**characterized in that**
each of the respective end reflector sections is raised at an edge from the reflecting and cooling body at the same height as the transition from the curved section into the end of the sources of radiation used in the reflecting and cooling body and exhibit a spacing from the curved sections of the sources of radiation in the longitudinal direction of the reflecting and cooling body which ranges in particular between one-half and the full diameter of one source of radiation.

4. Radiator module according to any one of claims 1 to 3,
**characterized in that**
the end reflector sections extend along the elevated height of the reflecting and cooling body at most up to a plane extending through the central axes of the adjacently-arranged sources of radiation above the reflecting and cooling body.

5. Radiator module according to any one of the preceding claims,
**characterized in that**
cooling fins are formed on the rear side of the reflecting and cooling body facing away from the sources of radiation for realizing forced-air cooling.

6. Radiator module according to claim 5,
**characterized in that**
the reflecting and cooling body is configured with side walls extending above the height of the cooling fins and a rear wall connecting same such that the cooling fins are received in a substantially closed cool air channel extending in the longitudinal direction of the reflecting and cooling body.

7. Radiator module according to claim 5 or 6,
**characterized in that**
the ends of the sources of radiation and associated electrical contact devices are aligned with cooling fins and inserted into cut-outs of said cooling fins such that they are subjected to a flow of cooling air flowing over the cooling fins.

8. Radiator module according to claim 6 or 7,
**characterized in that**
securing and connecting means are arranged on the outer side of the rear wall of the cool air channel for the mounting of and the external electrical contact for the sources of radiation.

9. Radiator module according to any one of the preceding claims,
**characterized in that**
the reflecting and cooling body is formed as a single piece.

## Revendications

1. Module de rayonnement pour processus de traitements thermiques ou aux UV, comportant une pluralité de sources de rayonnement électromagnétique disposées pour l'essentiel les unes à côté des autres et parallèlement les unes par rapport aux autres, dont l'essentiel de la proportion active figure dans le domaine des UV, le domaine visible et/ou le domaine de l'IR proche, en particulier dans une plage de longueurs d'onde comprise entre 250 nm et 1,5 µm, les sources de rayonnement présentant chaque fois une section médiane allongée, deux extrémités coudées et deux sections de courbure reliant la section médiane et les extrémités, et un corps réflecteur et de refroidissement supportant les sources de rayonnement,
**caractérisé en ce que**
le corps réflecteur et de refroidissement présente deux sections de réflecteur d'extrémité, formées de façon monobloc, affectées aux sections de courbure des sources de rayonnement depuis la section principale allongée en ligne droite jusqu'aux extrémités.

2. Module de rayonnement selon la revendication 1,
**caractérisé en ce que**
les sections de réflecteur d'extrémité sont sensiblement planes sur la totalité de la largeur du module de rayonnement et forment un angle dans la plage des 30 ° à 75 °, de préférence de 45 ° à 60 °, avec le plan de l'extension longitudinale du module de rayonnement figurant parallèlement à l'axe longitudinal des sources de rayonnement logées.

3. Module de rayonnement selon la revendication 1 ou 2,
**caractérisé en ce que**
les sections de réflecteur d'extrémité s'élèvent chaque fois par une arête hors du corps réflecteur et de refroidissement, figurant à la même hauteur que la transition de la section de courbure en l'extrémité des sources de rayonnement disposées dans le corps réflecteur et de refroidissement et qui présente un écartement par rapport aux sections de courbure des sources de rayonnement dans la direction longitudinale du corps réflecteur et de refroidissement appartenant, en particulier, à la plage de la moitié au diamètre total d'une source de rayonnement.

4. Module de rayonnement selon l'une quelconque des revendications 1 à 3,
**caractérisé en ce que**
les sections de réflecteur d'extrémité, dans la direction de la hauteur du corps réflecteur et de refroidissement, atteignent au plus un plan au-dessus du corps réflecteur et de refroidissement passant par les axes médians des sources de rayonnement situées côte à côte.

5. Module de rayonnement selon l'une quelconque des revendications précédentes,
**caractérisé en ce que**,
au côté arrière détourné des sources de rayonnement du corps réflecteur et de refroidissement, des nervures de refroidissement sont formées pour réaliser un refroidissement à air par soufflerie.

6. Module de rayonnement selon la revendication 5,
**caractérisé en ce que**
le corps réflecteur et de refroidissement comporte des parois latérales dépassant la hauteur des nervures de refroidissement et une paroi arrière les reliant, de manière telle que les nervures de refroidissement sont reprises par un canal d'air de refroidissement, pour l'essentiel fermé, disposé dans la direction longitudinale du corps réflecteur et de refroidissement.

7. Module de rayonnement selon la revendication 5 ou 6,
**caractérisé en ce que**
les extrémités des sources de rayonnement et les dispositifs de contact électrique affectés sont alignés avec des nervures de refroidissement et disposés de manière telle dans des découpes des nervures de refroidissement qu'ils sont frappés par le flux d'air de refroidissement circulant à la surface des nervures de refroidissement.

8. Module de rayonnement selon la revendication 6 ou 7,
**caractérisé en ce que**
des moyens de fixation et de raccordement sont disposés sur le côté extérieur de la paroi arrière du canal d'air de refroidissement pour le maintien et la mise en contact électrique externe des sources de rayonnement.

9. Module de rayonnement selon l'une quelconque des revendications précédentes,
**caractérisé en ce que**
le corps réflecteur et de refroidissement est réalisé de façon monobloc.
